# EUROPEAN PATENT APPLICATION

(11) **EP 4 431 172 A1**
(43) Date of publication of application: **18.09.2024**
(21) Application number: 24162991.4
(22) Date of filing: 12.03.2024
(51) Int. Cl.: B01D 46/00, B01D 46/12, B01D 46/24, B01D 46/62, B01D 46/16

(54) **REVERSIBLE ACCUMULATOR FILTER WITH INTEGRATED CARTRIDGE FOR HEAT PUMP SYSTEMS**

(30) Priority: 13.03.2023 IT 202300004632
(71) Applicant: SKG Italia S.p.A., 43126 Parma (PR) (IT)
(72) Inventor: BERNINI, Michele, 43123 Parma (PR) (IT)
(74) Representative: Branca, Emanuela

(57) **Abstract**

A filter (1) integrable into an automobile air conditioning system is described, comprising a container (2) having an inlet port (21) for the entry of a contaminated fluid and an outlet port (22) for the outlet of a filtered fluid, wherein the ports (21, 22) are configured to be connected to respective ducts; at least two filtering units (3) located in the container (2) and in fluid communication with each other and with the inlet port (21) and with the outlet port (22); each filtering unit (3) is configured to filter a fluid entering the inlet port (21); each filtering unit (3) has a predetermined filtering capacity at a first use greater than that of the upstream filtering unit (3).

## Description

The present invention relates to a modular multistage filter.

The present invention is usefully employed in the field of automobile air conditioning, particularly for hybrid and electric vehicles.

It is known that vehicles, and particularly automobiles, are provided with an air conditioning system.

The thermal automobile air conditioning systems are known, wherein a coolant such as for example CO₂, 1234yf, R134a flows inside a circuit, in which it is compressed, condensed, and then evaporated, in a continuous cycle. In particular, it is known that a fluid, when evaporating, absorbs heat from the environment. Thereby, the evaporation of the fluid in the circuit occurs in an exchanger at a vent facing the cabin, thereby refreshing it.

The compression of the fluid occurs by action of a compressor connected to the motor through a belt and therefore drawn by the same, allowing the fluid to travel the circuit.

In order to heat the cabin in the case of thermal automobiles provided with such air conditioning systems, taking the heat generated by the circuit for cooling the motor, leaving it to the air of the cabin through a heat exchanger, is known.

It is further known that, in recent years, the world of automobiles is moving towards electric and electric/hybrid mobility. Accordingly, in parallel with the development of the motor of such vehicles, which requires the presence of batteries for feeding them, also the components connected thereto, such as for example the air conditioning system, are evolving.

The electric automobile air conditioning systems are similar to those described above for thermal automobiles, but the compressor which circulates the coolant inside the system is directly fed by the battery.

In the case of electric automobiles, in order to heat the cabin, radiant lamps which heat the air of the cabin were introduced.

Disadvantageously, such lamps are highly energy-consuming and strongly impact on the mileage range of the vehicle.

Therefore, in order to overcome such problem, air conditioning systems with heat pump were developed, wherein the air conditioner not only has the function of cooling the cabin, but also heats it using the heat produced by the electric components of the vehicle, without requiring further energy input.

The currently existing heat pump systems can be designed in several manners and technologies.

In order to use as much as possible the heat produced by the coolant once compressed, systems having a much higher fluid flow rate, therefore requiring a greater control, were developed.

Accordingly, with respect to the traditional systems where the circuit wherein the refrigerant flows has a compressor, a condenser, a dehydrating filter, a pressure detector, and an evaporator, in the latest heat pump systems the number of components is almost doubled, as well as the flow of the refrigerant flowing therein is also doubled.

It is further known that in electric automobiles the batteries can be heated during their use, but mainly during the recharge.

Indeed, one of the greatest obligations of the electric automobiles is the duration of the recharge as during a trip there is hardly time to wait the number of hours needed to recharge the batteries of its own vehicle. For this reason, the market trend is to give more current for a quicker recharge. Thereby, however, the batteries undergo a greater overheating.

Furthermore, the most used batteries are currently lithium-ion batteries, particularly sensitive to overheating as they can explode in the presence of temperatures higher than 80°C, with the formation of flames difficult to extinguish.

Therefore, there is a need to provide for cooling the batteries.

In particular, in electric automobiles, there is often talk about thermal management of the automobile and not about simply conditioning as the same system should be invertible from heat pump to refreshing, with the addition of further components such as valves, tubing, and other sensors. Therefore, the system is used not only for the wellness of the passengers or for de-icing the glasses, but also for air conditioning the battery pack which feeds the motor, the electric motors themselves, and the inverters.

Disadvantageously, such system is complex as the components forming it are remarkably increased in number. Therefore, in the circuit there is a greater number of impurities, for example resulting from the mechanical or moulding processing of some of such components.

It is further known that the receiving dehydrating filters currently supplied perform different functions such as accumulating, separating liquid from gas, absorbing the possible humidity of the circuit, and filtering the impurities present in the system.

Disadvantageously, the filters present nowadays in the systems are capable of retaining neither a large quantity of residuals nor impurities or particles having a size lower than 40 microns.

Furthermore, since in the heat pump systems the refrigerant flows in some parts of the circuit in both the directions depending on the heating or refreshing operation mode, there is a larger quantity of circulating dirt.

Disadvantageously, the filters of such systems tend to be quickly obstructed, creating high pressure drops, or to block the adjusting components very sensitive to impurities.

The object underlying the present invention is to overcome the above-mentioned drawbacks and particularly to ideate a filter which is more effective to meet the market requirements related to the development of the electric automobiles.

A further object of the present invention is to provide a filter which allows to retain the impurities present in the system.

A further object of the present invention is to provide a filter which is long-lasting preventing system blocks.

The mentioned and other objects which will be more apparent below are achieved by a filter as recited in the independent claim 1.

Further features of the filter are provided in the dependent claims.

The features and advantages will be more apparent from the description of preferred, but not exclusive, embodiments of a filter, illustrated for indicative and non-limiting purposes with the aid of the attached drawings wherein:
- figure 1 shows a sectional perspective view of a first embodiment of a filter according to the present invention;
- figure 1a shows a partial exploded view of the filter of figure 1 in a perspective view;
- figure 1b shows the path of the fluid in the filter of figure 1;
- figure 2 shows a sectional perspective view of a variant of the filter of figure 1;
- figure 3 shows a sectional perspective view of a second embodiment of a filter according to the present invention;
- figure 3a shows a partial exploded view of the filter of figure 3 in a perspective view;
- figure 3b shows the path of the fluid in the filter of figure 3;
- figure 4 shows a sectional perspective view of a third embodiment of a filter according to the present invention;
- figure 4a shows an exploded view of the filter of figure 4 in a perspective view;
- figure 4b shows the path of the fluid in the filter of figure 4;
- figure 5 shows a perspective view of the filter of figure 4;
- figure 6 shows a perspective sectional view of a filter according to a variant of the second embodiment.

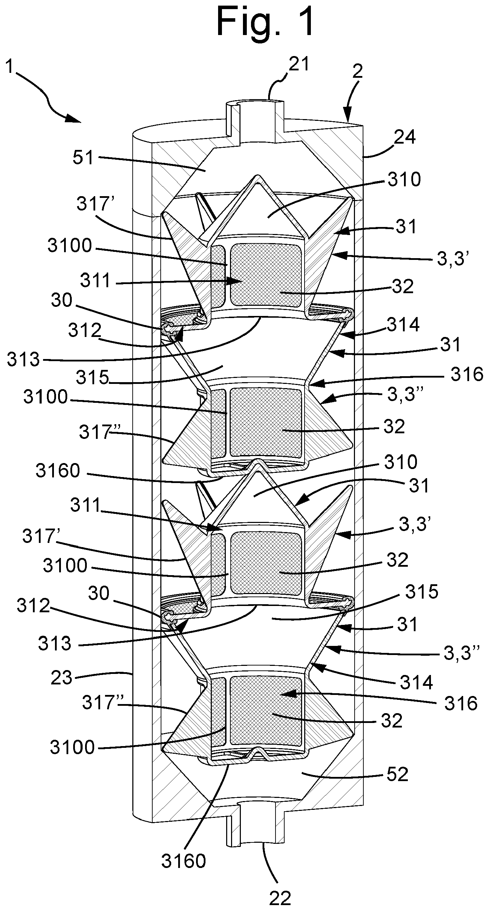

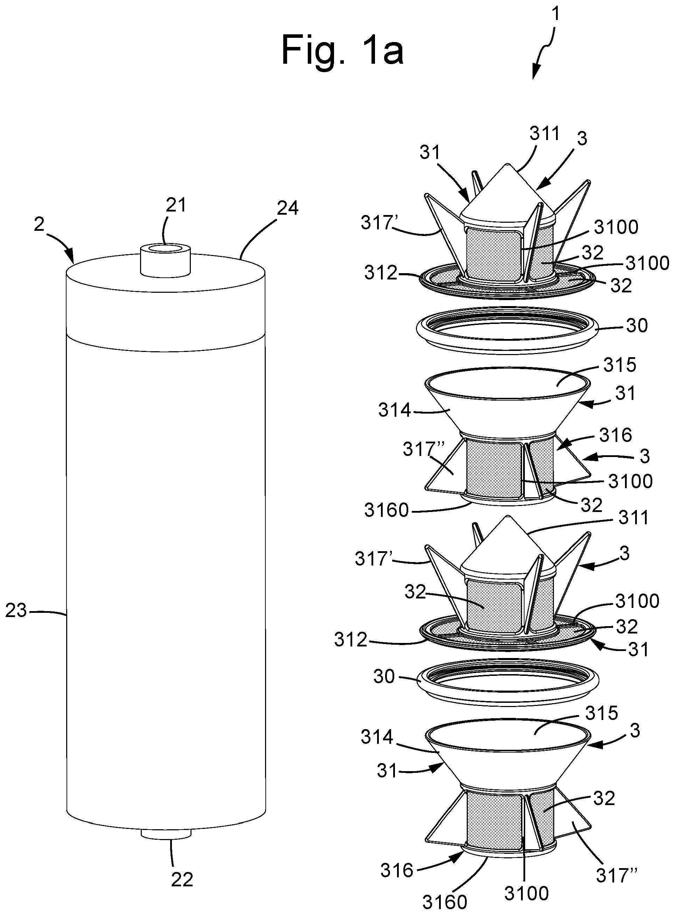

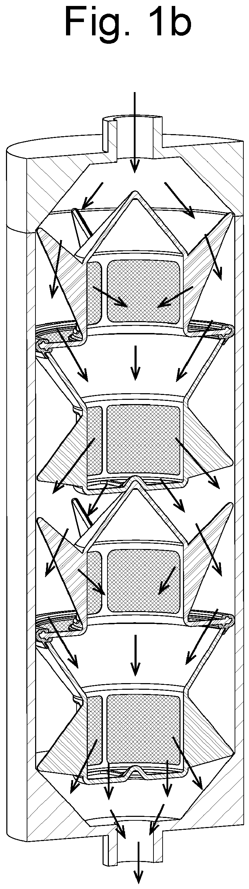

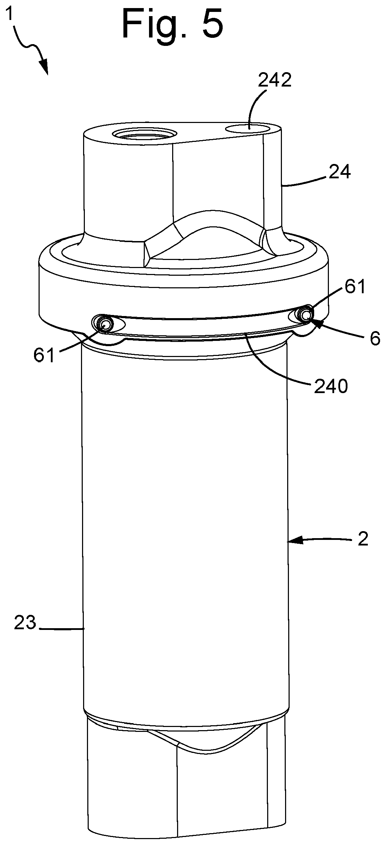

With reference to figures 1-6, a filter, indicated by reference number 1, is described below.

The filter according to the present invention is particularly, but not exclusively, appliable to an electric or hybrid automobile air conditioning system, particularly to a heat pump system.

Therefore, the filter 1 according to the present invention is suitable for integration into an automobile air conditioning or thermal management system.

It should be noted that, according to the present invention, the filter 1 is preferably intended only to the filtering function, differently from the known receiving dehydrating filters employed in the air conditioning systems.

The filter 1 comprises a container 2 having an inlet port 21 and an outlet port 22 for the outlet of a filtered fluid.

The ports 21, 22 are configured to be connected to respective ducts. In particular, such ducts are preferably part of an automobile air conditioning system.

The filter 1 is disconnectable from such ducts for replacing the same or one or more components.

The filter 1 comprises at least two filtering units 3 located in the container 2.

The filtering units 3 are in fluid communication with each other. Furthermore, the filtering units 3 are in fluid communication with the inlet port 21 and with the outlet port 22.

In particular, each filtering unit 3 is configured to filter a fluid entering the inlet port 21.

Such fluid is preferably a refrigerant, such as for example CO₂, 1234yf, R134a.

The filtering units 3 are arranged in series.

According to the present invention, each filtering unit 3 has a predetermined filtering capacity at a first use which is greater than that of the upstream filtering unit 3.

In other words, a filtering unit 3 which the fluid meets before another filtering unit 3 has a smaller filtering capacity, at a first use, than that subsequently met.

Filtering capacity at a first use particularly means the filtering power of a filtering unit before it is used, i.e., without possible obstructions resulting from retained particles being deposited.

Furthermore, each filtering unit 3 is downstream of the inlet port 21 and upstream of the outlet port 22.

Preferably, the filtering units 3 are inserted into the container 2 in a removable manner.

Still preferably, the filtering units 3 are removably connected to each other.

Still preferably, the container 2 has a body 23, housing the filtering units 3, and a head 24, connected to the body 23.

The body 23 is preferably tightly connected with the head 24.

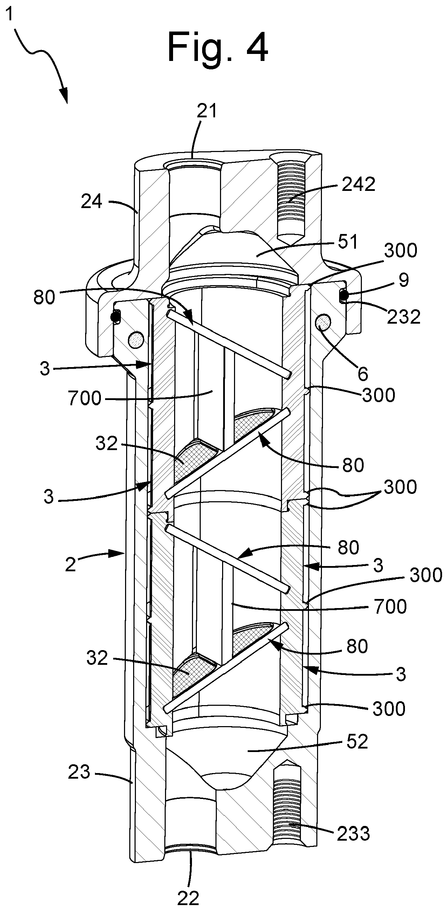

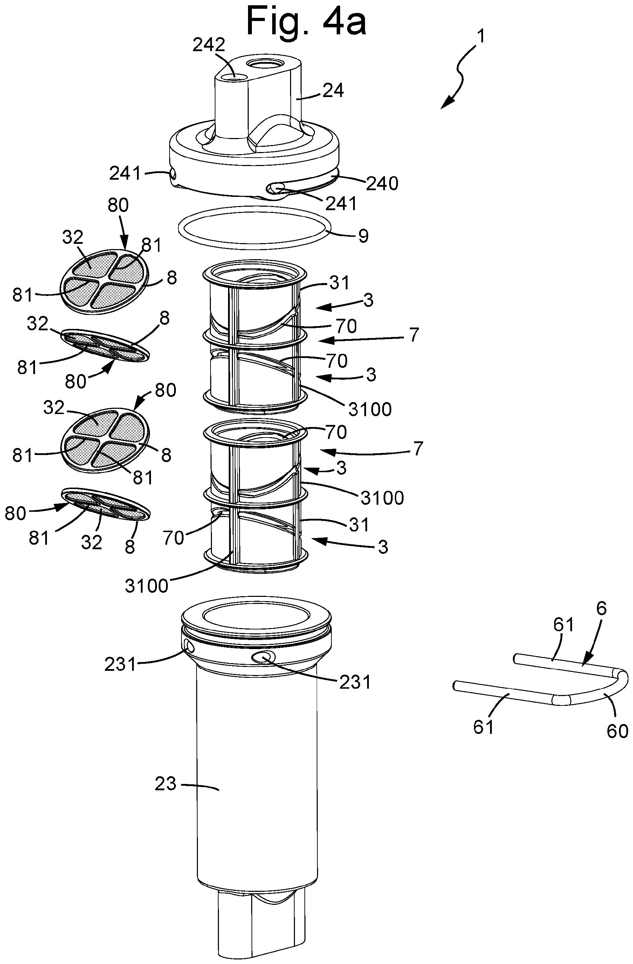

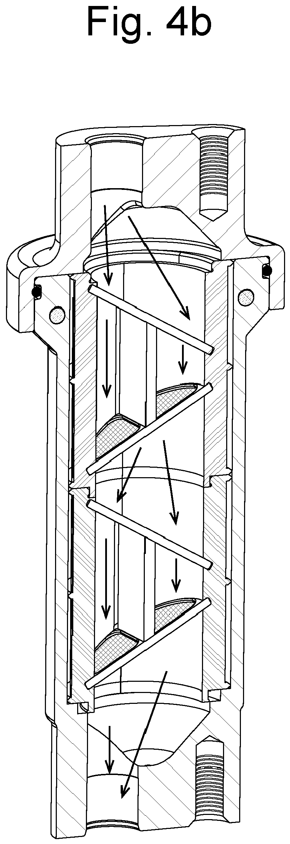

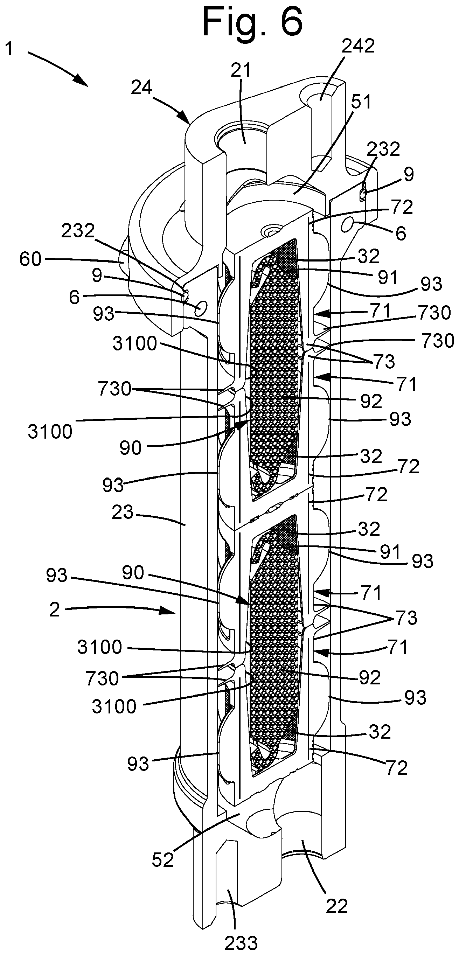

Therefore, the filter 1 preferably comprises a gasket 9 located between the head 24 and the body 23, particularly shown in figures 4, 4a and 6. Preferably, such gasket 9 is an O-ring.

In accordance, a groove 232, visible in figures 4 and 6, suitable for accommodating the gasket 9, is preferably formed on the body 23.

The body 23 can be made of aluminium or, alternatively, of plastic material. Regarding the body 23 made of plastic material, possible usable materials are for example ABS or PA 6.6, optionally with glass fibre additive.

The head 24 is preferably made of plastic material such as for example ABS or PA 6.6, optionally with glass fibre additive.

It should be noted that the head 24 is preferably disconnectable from the body 23 to allow removal of one or more of said filtering units 3.

Alternatively, the body 23 and the head 24 are hermetically fixed to each other in an unmovable manner. For example, the hermetic closure is obtained by welding, for example ultrasonic welding, or hot plate welding in the case where plastic materials are employed.

Otherwise, the body 23 and the head 24 can be snap-fit fixed to each other through mechanical deformation or by rolling.

The body 23 is preferably cylindrical and extends along a central axis.

The filter 1 according to the present invention has reduced sizes to be positioned anywhere in the system. For example, the body 23 has an outer diameter of 35 mm or 40 mm.

In the presence of a body 23 made of aluminium, this has a thickness ranging from 1 mm to 8 mm. For example, the thickness ranges from 1.2 mm to 2 mm for common refrigerants. For refrigerants employing CO₂, the required thickness is higher, for example 5-6 mm. In the presence of a body 23 made of plastic materials, a greater thickness is required to withstand the required pressures, for example at least 2 mm.

The body 23 and/or the head 24 can be connected to a fixing bracket (not illustrated) configured to fix the filter 1 in the motor compartment. Such bracket can be extruded with the body 23, and therefore integrated thereto, or mounted on the body 23, i.e., made separately from the body 23. For example, such bracket can be obtained by moulding.

Optionally, the body 23 and the head 24 are contoured to be connectable at the discretion of the customer through a flange (not illustrated).

The head 24 and the body 23 can have a respective threaded portion 242, 233, shown in figures 4-6, for accommodating a screw for fixing to such flange.

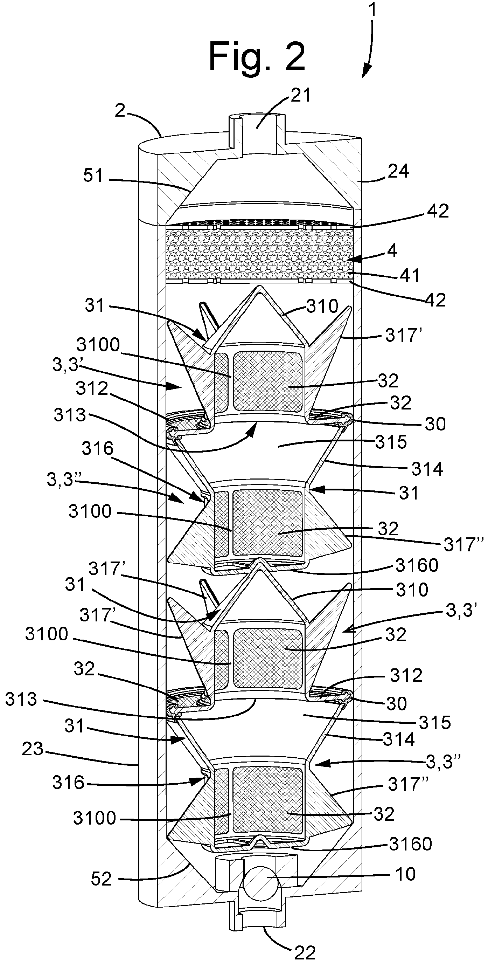

The filter 1 can incorporate one or more series of registers. In particular, the filter 1 preferably comprises a check valve 10, located at the outlet port 22 and particularly shown in figure 2.

Advantageously, in the case of inversion of the flow of the fluid, the dirt collected in the filtering units 3 can be prevented from circulating again.

Still with reference to figure 2, the filter 1 preferably comprises a portion filled with a molecular sieve 4, or cartridge.

The molecular sieve 4 is configured to absorb water molecules. Indeed, the rubber tubing and seals of the system can be permeable to water, which can enter the system but should absolutely be removed not to cause failures of the system itself.

Preferably, the molecular sieve 4 comprises absorbing particles 41 and a containing net 42, wherein the absorbing particles 41 are contained. Such containing net 42 is, in other words, a holed wall.

Such containing net 42 is preferably made of plastic and has for example a thickness of about 1.5 mm with meshes, or holes, for example of 0.8 mm.

The molecular sieve 4 is an obstacle from the point of view of cleaning the system due to the particles by which it is formed. For this reason, the molecular sieve 4 is placed at the head 24 and upstream of each of the filtering units 3. Thereby, the molecular sieve 4 can perform its absorbing function before the fluid is filtered, and the possible particles put into circulation are then retained by the filtering units 3.

Preferably, the molecular sieve 4 is integrated into the head 24 or into the body 23.

Preferably, the molecular sieve 4 comprises a tracer liquid for checking possible leaks in the system.

Still preferably, each filtering unit 3 comprises a support 31 and at least one filtering net 32 connected to the support 31. Such filtering net 32 is preferably made of polyester or nylon. The support 31 can be made of the same materials indicated above for the body 23 and the head 24. For example, the support is made of PA 6.6.

Preferably, the filtering net 32 is co-moulded with the support 31.

Each filtering net 32 has a plurality of meshes having a predetermined size. The size of the meshes defines the predetermined filtering capacity of the filtering unit 3.

Preferably, a first filtering unit 3' located at the inlet port 21 has mesh sizes ranging from 200 to 500 microns. Still preferably, a second filtering unit 3" located downstream of the first filtering unit 3" has mesh sizes ranging from 10 to 200 microns.

The filtering unit 3' with smaller filtering capacity should have a useful passage surface of at least 100 m², so as to prevent pressure drops when the same is saturated or obstructed at 50%.

Preferably, the filtering units 3 are present in multiples of two.

The filtering units 3 are connected two by two so as to make a seal with the body 23, as described below. Advantageously, the fluid can be prevented from passing laterally and therefore bypassing one or more filtering nets 32.

The filtering capacity of the filtering units 3 is gradually greater following the direction of the fluid, i.e., going towards the outlet port 22.

Preferably, the filtering units 3 are four.

In such case, for example, the meshes of the filtering units 3 have a size ranging from 300 to 400 microns at the inlet port 21, from 200 to 300 microns and from 50 to 100 microns for the middle filtering units 3, and from 10 to 50 microns at the outlet port 22.

Still preferably, the supports 31 of the filtering units 3 are all equal to each other or equal two by two.

For this purpose, three preferred embodiments according to the present invention are described below.

Furthermore, it should be noted that the filtering units 3 are preferably removably connected to each other.

Therefore, the filtering units 3 are removable independently of each other from the container 2.

Indeed, the filtering units 3 can be extracted and disconnected, for example to replace a single filtering unit 3 if this is damaged, obstructed, or saturated, maintaining the others.

According to preferred embodiments, the filtering units 3 are inserted in the body 23 and are disconnected from the head 24.

According to a different embodiment, and in the case for example of a need to replace the filtering pack, i.e., the set of one or more filtering units 3, one or more filtering units 3 are integrated into the head 24.

Integrated means that the filtering units 3 are fixed or snap-fit connected to the head 24. Therefore, by removing the head 24 from the body 23, the filtering units 3 are removed from the body 23.

According to a further embodiment, one or more filtering units 3 are integrated, i.e., fixed or snap-fit connected, to the body 23.

The first filtering unit 3' has also the function of fixing all the filtering units 3 located downstream of it. Therefore, the first filtering unit 3' is preferably integrated to the body 23, for example can be fixed to the body 23 through a mechanical deformation so as to remain in the prefixed position.

In particular, according to embodiments, the filtering units 3 are connected or fixed to the head 24 as a single body. Alternatively, the first filtering unit 3' is snap-fit connected or fixed to the head 24 as a single body while the further filtering units 3 present in the container 2 are connected to each other but disconnectable once removed the head 24 with the first filtering unit 3' and replaceable by new filtering units 3.

Preferably, the filter 1 comprises a deformable clip 6 configured to connect the head 24 to the body 23.

In the context of the present description, the term "clip" means a staple or clasp.

Such clip is visible in figures 4-6.

Preferably, the clip has a "U" shape. In other words, the clip 6 has a middle portion 60 which is curved and two end sections 61.

The clip 6 is configured to be inserted at least in part into the head 24 and at least in part in the body 23, keeping them joined on top of each other.

The clip 6 is further configured to be released from the head 23 and from the body 24 for allowing to disconnect them, for example when one or more filtering units 3 need to be replaced. Differently, in the case where there is no technical need to replace the filtering units 3, the clip 6 is deformed after being inserted to prevent the same from reopening.

More preferably, the head 24 has a seat 240 shaped for accommodating the middle portion 60 of the clip 6.

Still preferably, the body 23 and the head 24 each have at least one pair of holes 231, 241 alignable with each other and suitable for accommodating at least in part the clip 6. In other words, in order to insert the clip 6, the holes 231, 241 are alignable with each other by rotating the head 24 on the body 23 so that the holes 241 of the head 24 are located at the holes 231 of the body 23.

Preferably, the head 24 and the body 23 each have two pairs of holes 231, 241. In particular, each pair of holes 231, 241 is suitable for accommodating an end section 61 of the clip 6.

Three preferred embodiments of the filter 1 according to the present invention are described below.

According to a first embodiment, shown in figures 1-2, the support 31 of the first filtering unit 3' comprises a conical head 310 and a first cylindrical portion 311 wherein the filtering net 32 is embedded forming the side wall of the first filtering unit 3'.

Furthermore, the support 31 comprises a discoidal base 312 having a first opening 313 for the passage of the fluid.

A filtering net 32 forming a circular crown surrounding the opening 313 is embedded in the discoidal base 312. In other words, the first filtering unit 3' comprises two filtering nets 32, one in the discoidal base 312 and one in the first cylindrical portion 311.

Still according to such first embodiment, the support 31 of the second filtering unit 3" comprises a truncated cone head 314 defining a second opening 315. Such second opening 315 is located in fluid communication with the first opening 313.

The support 31 of the second filtering unit 3" further comprises a second cylindrical portion 316 wherein the filtering net 32 is embedded forming the side wall of the second filtering unit 3".

The second cylindrical portion 316 has a circular base 3160 which is open, suitable for the passage of the fluid.

In other words, the second filtering unit 3" comprises two filtering nets 32, both in the second cylindrical portion 316.

According to such embodiment, the filtering units 3 are preferably equal two by two, and the first filtering units 3' and the second filtering units 3" are arranged alternately to each other.

Still according to such embodiment, the circular base 3160 of a second filtering unit 3" is shaped to mate with the conical head 310 of a first filtering unit 3' .

Preferably, the filter 1 comprises a tightening ring 30 for each pair of filtering units 3. Indeed, such tightening ring 30 is a connection between the first filtering unit 3' and the second filtering unit 3" and is interposed between the filtering units 3 and the inner wall of the body 23. In particular, the discoidal base 312 is mated with the truncated cone head 314 through the tightening ring 30.

Alternatively, instead of the tightening ring 30, the filtering unit 3 can have one or more lips configured to be deformed and folded when matching the inner wall of the body 23, adapting to the inner wall of the body 23 and therefore acting as a seal, as illustrated below with reference to the second embodiment.

Still preferably, the first cylindrical portion 311 and the second cylindrical portion 316 comprise a plurality of inclined fins 317', 317''. Such inclined fins 317', 317'' are shaped to stabilize the vertical position of the filtering unit 3. According to an embodiment (not illustrated), such fins 317', 317" can be made so that the main extension plane of each fin 317', 317'' has an inclination of at least 20 degrees with respect to the central axis of the body 23, allowing the refrigerant to assume a spiral movement which could improve the performance of the filters.

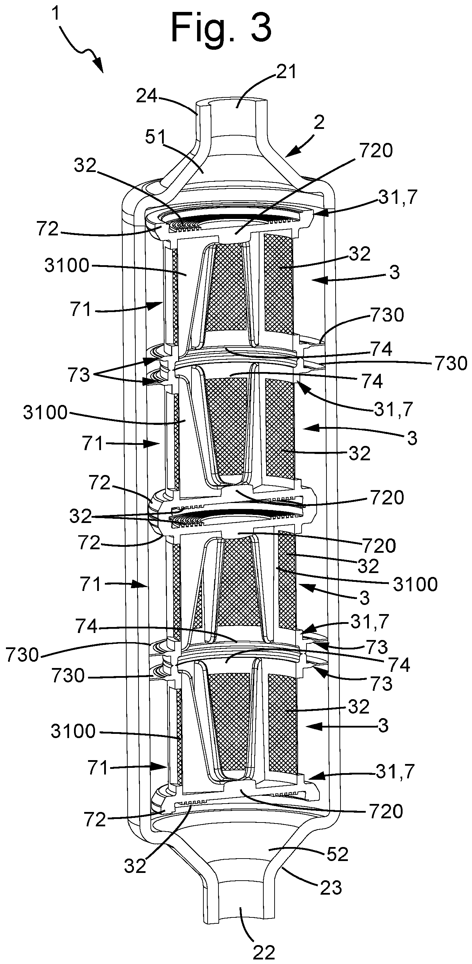

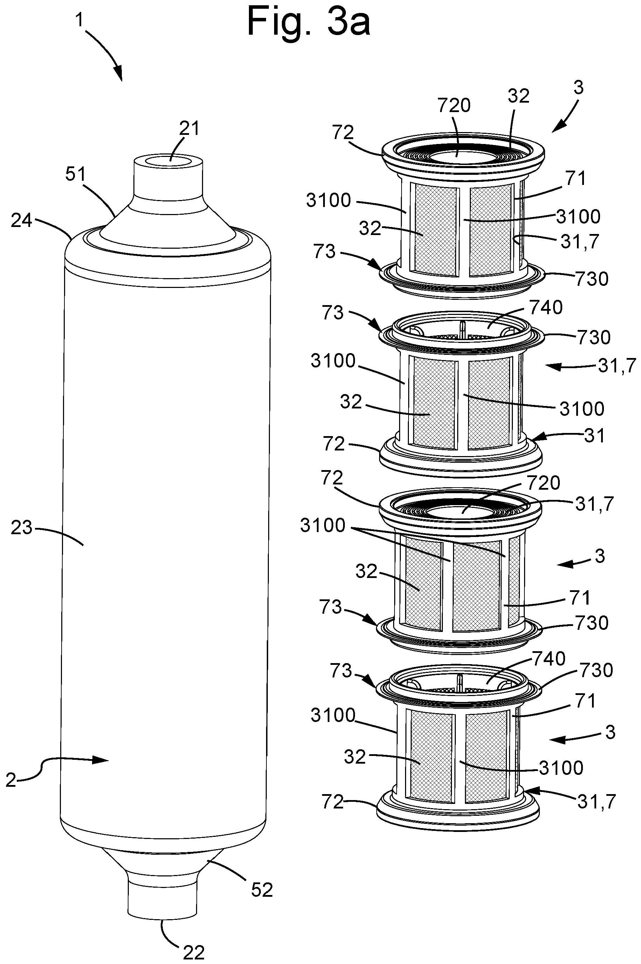

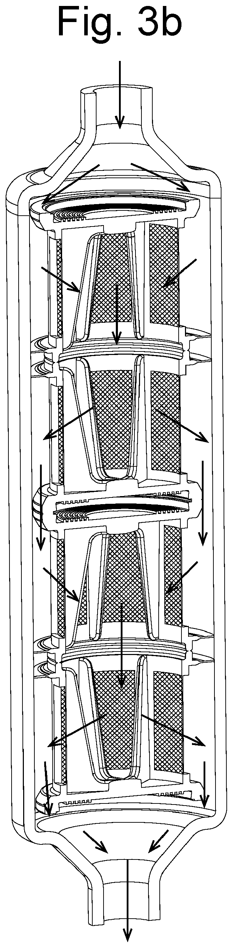

With reference to figures 3-4b, according to a second and a third embodiments, each support 31 comprises a spool 7.

Preferably, the spools 7 are equal to each other and stackable with each other. Still preferably, the spools 7 are configured to make a seal with the body 23.

According to a second embodiment, shown in figures 3-3b and 6, each spool 7 has a central portion 71 wherein the filtering net 32 is embedded forming the side wall of the filtering unit 3.

Still according to the second embodiment, each spool 7 has two end structures 72, 73, or end bodies.

In particular, a first end structure 72 forms a head portion 720 which is closed. Instead, the second end structure 73 defines a passage opening 74 for the passage of the fluid.

Each end structure 73 has a respective lip 730 which is flexible and having a thickness getting thinner from the centre of the filtering unit 3 towards the inner walls of the body 23. Advantageously, each lip 730 can be deformed and folded, adapting to the inner wall of the body 23 and therefore acting as a seal. As an alternative to the lips 730, the use of a tightening ring for each pair of filtering units 3 can be provided, as reported above with reference to the first embodiment.

The spools 7 are arranged in the body 23 so that the first end structure 72 of a filtering unit 3 is connected to the first end structure 72 of the upstream filtering unit 3, and the second end structure 73 of a filtering unit 3 is connected to the second end structure 73 of the downstream filtering unit 3.

In other words, the passage openings 74 face each other.

According to the third embodiment, shown in figures 4-5, each filtering unit 3 comprises a ring 8.

In particular, each filtering net 32 is embedded in a respective ring 8 forming a filter lens 80 inserted into the spool 7 in a removable manner.

Each ring 8 preferably has reinforcements 81 arranged lengthwise like a spoke.

The spool 7 has at least one incision 70 suitable for accommodating a respective lens 80. Such incision 70 is preferably oblique.

Preferably, in such embodiment a spool 7 is in common between two filtering units 3. Therefore, each spool 7 has two incisions 70.

Still preferably, each spool 7 has an inner wall 700 interposed between the two incisions 70, configured to abut against the respective lenses 80. The inner wall 700 has a function of structural support.

Still preferably, there are two spools 7.

According to such embodiment, the path of the fluid is entirely contained inside the spools 7. Preferably, tightening elements 300 between the filtering units 3 and the body 23 are however provided to prevent possible leakages. Such tightening elements 300 can be formed on the outer surface of the spools 7, which in such case can be partly made of elastomer for example by co-moulding (as represented in figures 4 and 4b), or alternatively can be O-ring gaskets added subsequently.

With reference to figure 6, showing a variant of the second embodiment providing the spools 7, a bag 90 which allows to filter particles having a diameter lower than a few tens of microns, for example 30 microns, can be provided.

In particular, the filter 1 can comprise at least one bag 90 which comprises in turn a case 91, optionally containing absorbing particles 92.

Thereby, the bag 90 can make a molecular sieve of a type similar to what is described above.

Indeed, the absorbing particles 92 are configured to absorb the possible humidity as well as water possibly present and further allows the case 91 to adhere to the inner walls of the spools 7.

The bag 90 is interposed between two adjacent spools 7, in particular it is inserted between the two head portions 720 and occupies the two respective passage openings 74.

Preferably, the filter 1 comprises a plurality of bags 90, each for a pair of spools 7.

The case 91 is preferably made of non-woven polyester fabric, which confers the filtering capability of the order of a few tens of microns.

Such case 91 has for example a thickness between 1 and 3 mm.

In accordance with such second embodiment, each spool 7 preferably has protrusions 93 adapted to abut with the inner wall of the body 23, so as to keep the filtering units 3 in place.

In accordance with what is shown in figure 6, the protrusions 93 are made at the central portion 71 of each spool 7.

The body 23 and the head 24, connected to each other to close the filter 1 by a clip 6 described above, are shown in figure 6.

However, as illustrated above, the body 23 and the head 24 can be fixed to each other by ultrasonic welding, or hot plate welding. Otherwise, the body 23 and the head 24 can be snap-fit connected.

In all the three embodiments described above, the supports 31 are preferably made in a single piece. The seal with the body 23 can be made of the classic gasket or also formed on the filtering unit itself 3, 3' through a fin, for example made of plastic, the same material used for the filtering unit 3, 3'. Still preferably, according to all the three described embodiments, the supports 31 have respective ribbings 3100 suitable for conferring structural support to the filtering unit 3, as well as directing the refrigerant in a preset direction.

In accordance with the second embodiment, preferably the protrusions 93 are made at least at two ribbings 3100 placed on opposite sides of the spool 7.

Preferably, the container 2 has a diverging portion 51 defined between the inlet port 21 and the filtering units 3. Still preferably, the container 2 has a converging portion 52 defined between the filtering units 3 and the outlet port 22.

The path of the fluid occurs through channels defined inside the filtering unit 3 and also between one or two filtering units 3 and the inner wall of the body 3. The channels are in fluid communication with each other. The path of the fluid is indicated in figures 1b, 3b and 4b by arrows.

Advantageously, the filter in accordance with the present invention is completely recyclable and ecologic, making the components with the same materials.

Advantageously, by using welding or hot plate to join the two components, i.e., the head and the body, a hermetic and strong closure is obtained. Such closure is further strong in the case of materials equal to each other, as they interpenetrate each other due to melting.

Advantageously, the filter in accordance with the present invention allows to filter particles of a few tens of microns.

Advantageously, the filter in accordance with the present invention is adapted to withstand temperatures from -20°C to +80°C.

Advantageously, the filter in accordance with the present invention is adapted to operate at pressures ranging from 5 to 30 bars.

Advantageously, the pressure drop between input and output of the fluid can be contained between 0.05 bars and 0.5 bars, with a coolant flow rate between 30 and 500 litres/hour.

The filter thus conceived is susceptible of a number of modifications and variants, all falling within the scope of the inventive concept; furthermore, all the details are replaceable by technically equivalent elements. In practice, the used materials, as long as compatible with the specific use, as well as the contingent shapes and sizes, can be any depending on the technical requirements.

## Claims

1. Filter (1), suitable for integration into an automobile air conditioning system, said filter (1) comprising:
- a container (2) having
- an inlet port (21) for the entry of a contaminated fluid,
- an outlet port (22) for the outlet of a filtered fluid; said ports (21, 22) being configured to be connected to respective ducts;
- at least two filtering units (3) located in said container (2) and in fluid communication with each other and with said inlet port (21) and with said outlet port (22); each filtering unit (3) being configured to filter a fluid entering said inlet port (21);
each filtering unit (3) having a predetermined filtering capacity at a first use greater than that of the upstream filtering unit (3).

2. Filter (1) according to the preceding claim, wherein said container (2) has a body (23) housing the filtering units (3) and a head (24) tightly connected to the body (23) and disconnectable from the body (23) to allow removal of one or more of said filtering units (3) from said container (2).

3. Filter (1) according to claim 1 or 2, wherein said filtering units are removably connected to each other.

4. Filter (1) according to claim 2, comprising a portion filled with a molecular sieve (4) configured to absorb water molecules, said molecular sieve (4) being placed at the head (24) and upstream of each of the filtering units (3).

5. Filter (1) according to the preceding claim, wherein said molecular sieve (4) is integrated into the head (24) or into the body (23).

6. Filter (1) according to any of the preceding claims, wherein each filtering unit (3) comprises a support (31) and at least one filtering net (32) connected to said support (31); each filtering net (32) having a plurality of meshes having a predetermined size defining said predetermined filtering capacity.

7. Filter (1) according to the preceding claim, wherein a first filtering unit (3') located at the inlet port (21) has mesh sizes ranging from 200 to 500 microns; a second filtering unit (3'') downstream of said first filtering unit (3') has mesh sizes ranging from 10 to 200 microns.

8. Filter (1) according to claim 2, comprising a deformable clip (6) configured to connect said head (24) to said body (23); said body (23) and said head (24) each having at least one pair of holes (231, 241) alignable with each other and suitable for accommodating at least in part said clip (6).

9. Filter (1) according to claim 6 or 7, wherein the support (31) of said first filtering unit (3') comprises:
- a conical head (310),
- a first cylindrical portion (311) wherein said filtering net (32) is embedded forming the side wall of said first filtering unit (3'),
- a discoidal base (312) having a first opening (313) for the passage of said fluid, in said discoidal base (312) being embedded said filtering net (32) forming a circular crown surrounding said opening (313).

10. Filter (1) according to the preceding claim, wherein the support (31) of said second filtering unit (3") comprises:
- a truncated cone head (314) defining a second opening (315) in fluid communication with said first opening (313),
- a second cylindrical portion (316) wherein said filtering net (32) is embedded forming the side wall of said second filtering unit (3"); said second cylindrical portion (316) having a circular base (3160) shaped to mate with the conical head (310) of a first filtering unit (3").

11. Filter (1) according to the preceding claim, wherein said first cylindrical portion (311) and said second cylindrical portion (316) comprise a plurality of inclined fins (317', 317'').

12. Filter (1) according to claim 6 or 7, wherein each support (31) comprises a spool (7), said spools (7) being equal to each other and stackable with each other.

13. Filter (1) according to the preceding claim, wherein each spool (7) has:
- a central portion (71) wherein said filtering net (32) is embedded forming the side wall of said filtering unit (3);
- two end structures (72, 73); a first end structure (72) forming a closed head portion (720), a second end structure (73) defining a passage opening (74) for the passage of said fluid; said spools (7) being arranged in the body (23) so that the first end structure (72) of a filtering unit (3) is connected to the first end structure (72) of the filtering unit (3) upstream, and the second end structure (73) of a filtering unit (3) is connected to the second end structure (73) of the filtering unit (3) downstream.

14. Filter (1) according to claim 12, wherein each filtering unit (3) comprises a ring (8); each filtering net (32) being embedded in a respective ring (8) forming a filter lens (80) inserted into said spool (7) in a removable manner.

15. Filter (1) according to claim 12 or 13, comprising at least one bag (90) comprising a case (91), optionally containing absorbing particles (92).
